# EUROPEAN PATENT APPLICATION

(11) **EP 4 701 069 A1**
(43) Date of publication of application: **25.02.2026**
(21) Application number: 24196031.9
(22) Date of filing: 22.08.2024
(51) Int. Cl.: H02P 6/28, H02P 21/22, H02M 1/00

(54) **SPACE VECTOR MODULATION FOR MULTIPHASE MOTORS**

(71) Applicant: Melexis Technologies NV, 3980 Tessenderlo-Ham (BE)
(72) Inventor: LITOSH, Anton, 99099 Erfurt (DE)
(74) Representative: Winger

(57) **Abstract**

The invention relates to a motor driver and method for driving motors with multiple phases. The motor driving circuit (120) comprising a plurality of switches (121) and a shunt resistor (122) in a common path of the motor driving circuit (120). The control unit (110) is configured for: generating control signals for the switches (121) to generate pulse width modulation signals, based on space vector modulation that utilizes bottom clamping alternatingly between the different motor phases (210) or that utilizes top clamping alternatingly between the different motor phases (210); injecting zero vectors at clamping transitions from one phase to another phase such that also at the clamping transitions two current measurements through the shunt resistor (122) can be done for determining the phase currents from these current measurements; measuring the current through the shunt resistor (122) at least twice per period of time; determining the phase currents based on the measured currents through the shunt resistor. The control unit is configured for using a closed loop control algorithm wherein the determined phase currents are used as feedback for generating the control signals for the switches.

## Description

### Field of the invention

The invention relates to the field of motor drivers and methods for controlling multiphase electrical motors. More specifically it relates to a motor driver or method which uses space vector modulation for driving the multiphase motor.

### Background of the invention

Multiphase motors, such as Brushless Direct Current (BLDC) motors, are commonly driven by sequentially energizing their windings using Pulse Width Modulation (PWM) signals. These motors require precise control over the switching of transistors in the motor driving circuit to generate the necessary magnetic fields for operation. The challenge in controlling these motors efficiently and cost-effectively is particularly pronounced in low-cost applications where the available computational resources and hardware are limited.

One established method for operating electronically commutated synchronous machines with multiple phases involves the use of an actuation circuit. This circuit is designed to operate the synchronous machine and includes at least two switches per phase. The actuation level for each phase is periodically determined by the circuit, which calculates a switch-on period. During this period, the supply voltage is applied to the respective phase through the corresponding switch to determine the actuation level.

The commutation of each coil can be done by making use of a voltage source inverter (VSI) topology. In such systems, each motor phase is connected to a half-bridge circuit consisting of two transistors, which are controlled by PWM signals generated by a microcontroller unit (MCU). These PWM signals dictate the switching periods, during which the supply voltage is applied to the respective motor phases to create a rotating magnetic field, known as a Space Vector (SV). This rotating field drives the rotor, which follows the space vector according to the generated magnetomotive force (MMF), with the MMF being proportional to the applied PWM duty cycle.

In advanced motor control systems, closed-loop control algorithms such as Field Oriented Control (FOC) are employed to optimize motor performance. These algorithms require accurate feedback on the actual phase currents, which can be challenging in single-shunt applications. In such configurations, current measurements are typically taken through a single shunt resistor placed in the common path of the motor driving circuit. However, only one phase current can be measured at any given time, necessitating the reconstruction of the remaining phase currents based on the measured values and Kirchhoff's circuit law, assuming a balanced system with no leakage currents.

A significant limitation of existing methods is the inefficiency of the switching schemes used, particularly in low-cost systems where the MCU lacks sophisticated mathematical co-processors. Traditional Space Vector PWM (SVPWM) schemes, which shift the zero point of the space vector to maximize energy delivery, require complex calculations and involve continuous switching of all motor phases. This results in higher switching losses and increased current consumption due to transition losses during switching events.

To address these inefficiencies, alternative space vector modulation (SVM) techniques, such as top and bottom clamping, have been developed. These methods reduce switching losses by limiting the active phases to only two at any given time, while still delivering the required energy. However, these techniques also face challenges in low-cost single-shunt applications, where the accurate reconstruction of phase currents is crucial for effective motor control.

For instance, when using center-aligned PWM with a single shunt, the absolute minimum PWM cycle needed for current measurement is determined by the settling time of the signal and the ADC acquisition time. At certain rotor positions, it becomes impossible to perform the necessary second current measurement within the available PWM cycle, leading to a blanking time where the motor operates without feedback. This lack of feedback can result in acoustic noise, torque ripple, and other performance issues.

Existing solutions, such as increasing the PWM cycle to accommodate current measurements, often lead to asymmetric energy distribution and incorrect application of the mathematical target vector, further exacerbating these issues.

In light of these challenges, the present invention proposes an improved motor driver and method for space vector modulation in single-shunt motor applications.

### Summary of the invention

It is an object of embodiments of the present invention to provide a good motor driver and a good method for driving a motor which comprises a plurality of phases.

The above objective is accomplished by a method and device according to the present invention.

In a first aspect embodiments of the present invention relate to a motor driver for driving a motor which comprises a plurality of phases. The motor driver comprises:
- A motor driving circuit for providing current through the motor phases; The motor driving circuit comprising a plurality of switches and a shunt resistor in a common path of the motor driving circuit;
- A control unit configured for generating control signals for the switches to generate pulse width modulation signals, based on space vector modulation that utilizes bottom clamping alternatingly between the different motor phases or that utilizes top clamping alternatingly between the different motor phases. The control unit is, furthermore, configured for injecting zero vectors at clamping transitions from one phase to another phase such that also at the clamping transitions two current measurements through the shunt resistor can be done for determining the phase currents from these current measurements. The control unit is, furthermore, configured for measuring the current through the shunt resistor at least twice per period of time and for determining the phase currents based on the measured currents through the shunt resistor. The control unit is configured for using a closed loop control algorithm wherein the determined phase currents are used as feedback for generating the control signals for the switches. Where in embodiments of the present invention is expressed that the current through the shunt resistor should be measured at least twice per period of time, this means that the current through the shunt resistor should be measured at least twice per PWM cycle.

The motor driver may for example be a motor driver for a brushless direct current motor, a permanent magnetic synchronous motor, a synchronous reluctance motor, or an alternate current induction motor.

It is an advantage of embodiments of the present invention that switching losses are reduced by implementing clamping alternatingly between the different motor phases. It is, moreover, an advantage of embodiments of the present invention that by introducing the zero vectors at clamping transitions two phases at any period of time can be measured, so that Kirchhoff's circuit law can always be applied. It is an advantage of embodiments of the present invention that the space vector is modulated in such a way that two current measurements are always possible to reconstruct all the phase currents for the closed loop control algorithm under use of at least one shunt.

In embodiments of the present invention only when the rotor moves to an angle position when current measurement is not possible, the zero vector is added to the space vector such that current measurement is also possible at this point.

In embodiments of the present invention the control unit is configured for injecting varying zero vectors at the clamping transitions. The amplitude of the zero vector amplitude may for example be linearly varying in function of the rotor angle and/or in function of the rotor speed. The invention is, however, not limited thereto. The relationship between the zero vector amplitude and the rotor angle or the rotor speed may for example be a quadratic function or another function in function or time and/or rotor angle.

It is an advantage of embodiments of the present invention that the amplitude of the zero vectors is varied linearly as a function of time and angle, as this results in a reduced acoustic and EMC noise.

In embodiments of the present invention the closed loop control algorithm is field oriented control.

In embodiments of the present invention the pulse width modulation signals are such that sine wave shaped phase currents with a fundamental frequency are obtained.

In embodiments of the present invention the control unit is configured to generate pulse width modulation signals, such that the obtained phase currents additionally comprise a third harmonic component which has a frequency three times the fundamental frequency.

In embodiments of the present invention the motor driving circuit is a three-phase voltage source inverter.

In a second aspect embodiments of the present invention relate to a motor system comprising a motor driver according to embodiments of the present invention and a motor comprising a plurality of phases, wherein the motor driver is configured for driving the motor.

In embodiments of the present invention the motor is a brushless direct current motor, or a permanent magnetic synchronous motor, or a synchronous reluctance motor, or an alternate current induction motor.

In a third aspect embodiments of the present invention relate to a method for controlling a motor comprising a plurality of phases. The method comprises obtaining control signals to generate pulse width modulation signals, based on space vector modulation that utilizes bottom clamping alternatingly between the different motor phases or that utilizes top clamping alternatingly between the different motor phases. The control signals are obtained using phase currents as feedback using a closed loop control algorithm. Obtaining the control signals comprises injecting zero vectors at clamping transitions from one phase to another phase such that also at the clamping transitions two current measurements through the shunt resistor can be done for determining the phase currents from these current measurements.
The method, furthermore, comprises applying the control signals for driving the motor, measuring the current through the shunt resistor at least twice per period of time, and determining the phase currents based on the measured currents through the shunt resistor.

In embodiments of the present invention injecting the zero vectors comprises injecting varying zero vectors at the clamping transitions.

In embodiments of the present invention the control algorithm is field oriented control.

In embodiments of the present invention the control signals are such that sine wave shaped phase currents with a fundamental frequency are obtained.

In embodiments of the present invention the control signals are such that the obtained phase currents additionally comprise a third harmonic component which has a frequency three times the fundamental frequency.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic drawing of a motor driver in accordance with embodiments of the present invention with single shunt measurements related to ground.
FIG. 2 shows a schematic drawing of a motor driver in accordance with embodiments of the present invention with single shunt measurements related to supply.
FIG. 3 shows a schematic drawing of field oriented control, which is applicable as closed loop control algorithm in accordance with embodiments of the present invention.
FIG. 4 illustrates space vector PWM with alternative switching by showing the voltage for each of the phases in function of time.
FIG. 5 illustrates space vector PWM with top clamp by showing the voltage for each of the phases in function of time.
FIG. 6 illustrates space vector PWM with bottom clamp by showing the voltage for each of the phases in function of time.
FIG. 7 illustrates center aligned PWM with ADC sampling and ADC acquisition time for two current measurements on the single shunt.
FIG. 8 illustrates center aligned PWM with a target PWM much smaller than one ADC measurement.
FIG. 9 shows a vector diagram with the mathematical target vector and the wrong physically applied vector for increasing the PWM on-time.
FIG. 10 illustrates space vector modulation with bottom clamp and distinguishes 3 cases at different moments in time, wherein no additional modulation is possible for enabling two current measurements at case 2.
FIG. 11 shows the PWM cycle for case 1 at the top, the PWM cycle for case 2 in the middle, and the PWM cycle for case 3 at the bottom.
FIG. 12 illustrates space vector PWM with bottom clamp in combination with an additional modulation for enabling two current measurements at case 2, in accordance with embodiments of the present invention.
FIG. 13 shows the requested PWM cycles for cases 1, 2, and 3 in FIG. 12 such that in case 2 also two current measurements can be done, in accordance with embodiments of the present invention.
FIG. 14 illustrates space vector PWM with bottom clamp in combination with an additional modulation every 120 electrical degrees for enabling two current measurements, in accordance with embodiments of the present invention.
FIG. 15 illustrates space vector modulation, with no additional modulation, after inverse Clarke transformation.
FIG. 16 illustrates space vector modulation, with additional modulation, every 120 electrical degrees, after inverse Clarke transformation, in accordance with embodiments of the present invention.
FIG. 17 shows the generated vectors for the space vector modulation illustrated in FIG. 16, in accordance with embodiments of the present invention.
FIG. 18 shows three sinusoidal signals generated by a SVM, in accordance with embodiments of the present invention, when the target PWM is smaller than the minimum PWM.
FIG. 19 shows three sinusoidal signals generated by a SVM, in accordance with embodiments of the present invention, when the target PWM is bigger that the minimal PWM.
FIG. 20 shows three sinusoidal signals generated by a SVM, in accordance with embodiments of the present invention, when the target PWM is significantly bigger that the minimal PWM.
FIG. 21 shows oscilloscope plots of the applied PWM, in a method in accordance with embodiments of the present invention, and of the resulting duty cycles.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a zero vector, reference is made to a state in SVM where all phases of the inverter output the same voltage, effectively resulting in no voltage applied to the motor windings. In embodiment of the present invention such a zero vector may be added to a non-zero vector. In embodiments of the present invention ground (GND) or the motor supply voltage (VSM) may be used as a reference for the zero vector.

Where in embodiments of the present invention reference is made to the transition from one bottom clamping phase to another bottom clamping phase, reference is made to an intermediate period between a period wherein one phase is clamped to the bottom voltage (e.g. ground) and a subsequent period wherein another phase is clamped to the bottom voltage. In prior art space vector modulation, both phases are clamped to the bottom during this intermediate period.

Where in embodiments of the present invention reference is made to the transition from one top clamping phase to another top clamping phase, reference is made to an intermediate period between a period wherein one phase is clamped to the top voltage (e.g. the supply voltage) and a subsequent period wherein another phase is clamped to the top voltage. In prior art space vector modulation, both phases are clamped to the top during this intermediate period.

A novel space vector modulation (SVM) method is disclosed herein, aimed at creating a rotating voltage reference vector that is applicable to motors such as brushless direct current (BLDC) motors, permanent magnet synchronous motors (PMSM), synchronous reluctance motors (SynRM), and alternating current induction motors (ACIM). The proposed SVM method is particularly suited for low-cost single-shunt applications that demand low acoustical noise and minimal torque ripple, and it can be implemented on low-powered microcontroller units (MCUs) to generate pulse width modulation (PWM) signals for a three-phase inverter. The duty cycles of each channel are determined based on the angular position and length of the space vector.

In a first aspect embodiments of the present invention relate to a motor driver 100 for driving a motor 200 comprising a plurality of phases 210 and in a second aspect embodiments of the present invention relate to a motor system 300 comprising a motor driver 100 and a motor 200 wherein the motor driver 100 is configured for driving the motor 200.

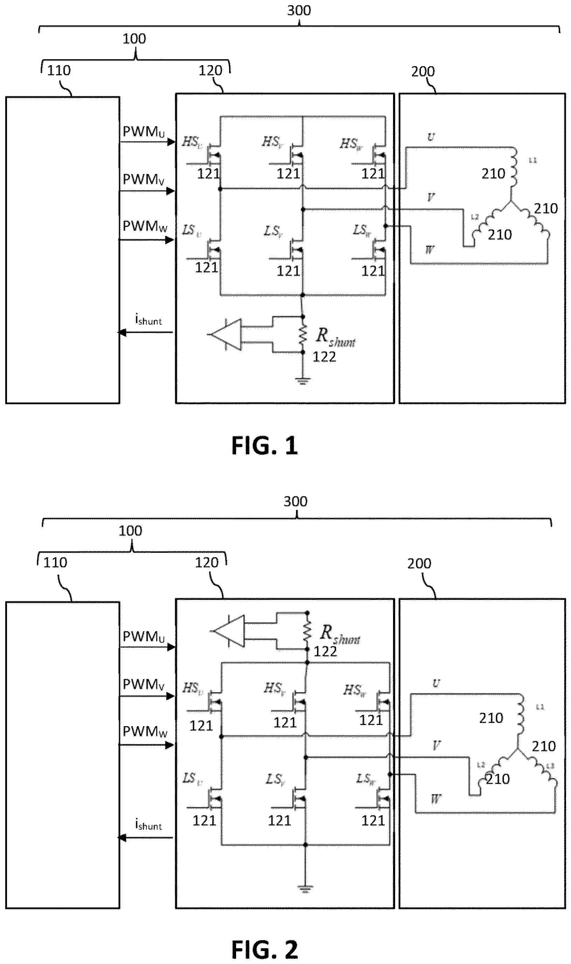

FIG. 1 shows a schematic drawing of a motor driver 100 and of a motor system 300 in accordance with embodiments of the present invention, where single shunt measurements are related to ground. The motor driving circuit comprises a plurality of switches 121 and a shunt resistor 122 placed in the common path of the motor driving circuit, allowing for current measurement. The control unit 110 is configured for generating control signals PWMᵤ, PWMᵥ, PWM_{w} for the switches 121 to generate pulse width modulation signals, based on space vector modulation that utilizes bottom clamping alternatingly between the different motor phases. At the transition from one bottom clamping phase to another bottom clamping phase zero vectors are injected such that also at the transition two current measurements through the shunt resistor can be done for determining the phase currents from these current measurements. The control unit 110 is, furthermore, configured for measuring the current iₛₕᵤₙₜ through the shunt resistor 122 at least twice per period of time and for determining the phase currents based on the measured currents through the shunt resistor and for using a closed loop control algorithm wherein the determined phase currents are used as feedback for generating the control signals for the switches.

FIG. 2 illustrates a similar configuration, but with single shunt measurements related to the supply instead of ground. The motor driving circuit comprises a plurality of switches 121 and a shunt resistor 122 placed in the common path of the motor driving circuit, allowing for current measurement. The control unit 110 is configured for generating control signals PWMᵤ, PWMᵥ, PWM_{w} for the switches 121 to generate pulse width modulation signals, based on space vector modulation that utilizes top clamping alternatingly between the different motor phases. At the transition from one top clamping phase to another top clamping phase zero vectors are injected such that also at the transition two current measurements through the shunt resistor can be done for determining the phase currents from these current measurements. Also in this case the control unit 110 is configured for measuring the current iₛₕᵤₙₜ through the shunt resistor 122 at least twice per period of time and for determining the phase currents based on the measured currents through the shunt resistor and for using a closed loop control algorithm wherein the determined phase currents are used as feedback for generating the control signals for the switches.

FIG. 1 and FIG. 2 also schematically show the control system 300. This control system 300 comprises the motor driver 100 and the motor 200 comprising the plurality of phases 210.

In embodiments of the present invention these configurations may be used for implementing the SVM method described herein.

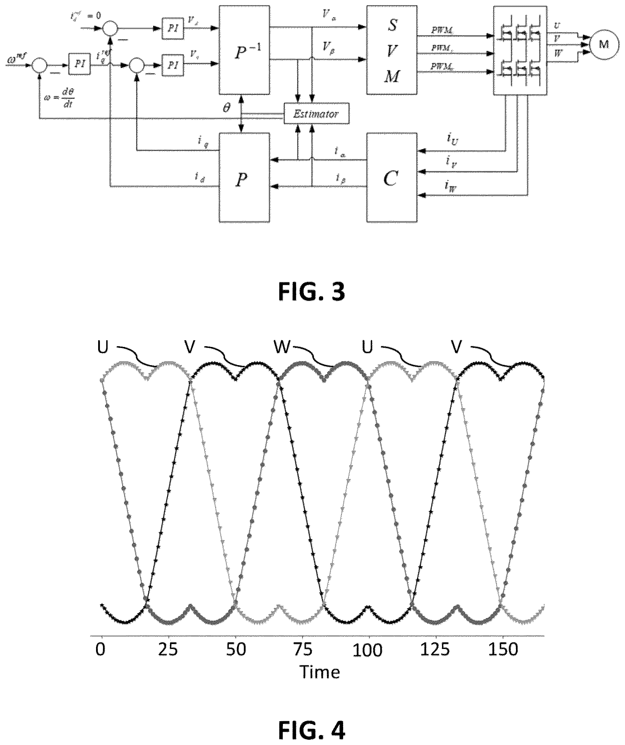

In embodiments of the present invention the closed loop control algorithm may be Field Oriented Control (FOC). FIG. 3 shows a schematic drawing of FOC. The FOC algorithm uses feedback from the measured phase currents to determine the necessary voltage vectors V_{d}, V_{q} in the d-q frame to achieve the desired torque and flux. The control unit uses these voltage vectors for determining the PWM signals to driver the inverter based on SVM. In embodiments of the present invention the control unit is configured for generating control signals for the switches to generate pulse width modulation signals PWMᵤ, PWMᵥ, PWM_{w}. In the FOC scheme illustrated in FIG. 3 the phase currents iᵤ, iᵥ, i_{w}, are converted into currents i_{α}, and i_{β} in a two-phase orthogonal stationary reference frame using a Clarke transformation C. A Park transformation is used for obtaining the currents in the d-q reference frame. Proportional-Integral PI controllers are used for obtaining the necessary voltage vectors V_{d} and V_{q}. The role of the PI controller is to ensure that the actual current values (measured from the motor) match the reference current values (set by the control algorithm based on the desired torque and speed). Using an inverse Park transformation P⁻¹ the voltage vectors V_{d} and V_{q} are transformed in voltage vectors V_{α}, and V_{β} in the two-phase orthogonal stationary reference frame. The control unit is configured to generate the pulse width modulation signals PWMᵤ, PWMᵥ, PWM_{w}, based on space vector modulation SVM. Also the Clarke transformation C, the Park transformation P and the inverse Park transformation P⁻¹ may be implemented by the control unit.

In embodiments of the present embodiments the control unit may for example be a microcontroller (or another type of processing device such as a digital signal processer, a state machine, FPGA or ASIC). In embodiments of the present invention the control unit is configured for executing control algorithms for generating the control signals by processing real-time inputs such as current through the shunt resistor. This current may be sampled using an ADC.

In typical motor control systems, switching losses can be a significant issue. To address this, FIG. 4 illustrates space vector PWM with alternative switching. It shows the voltage for each of the motor phases as a function of time. This method involves alternating the switching of phases to reduce the overall switching losses.

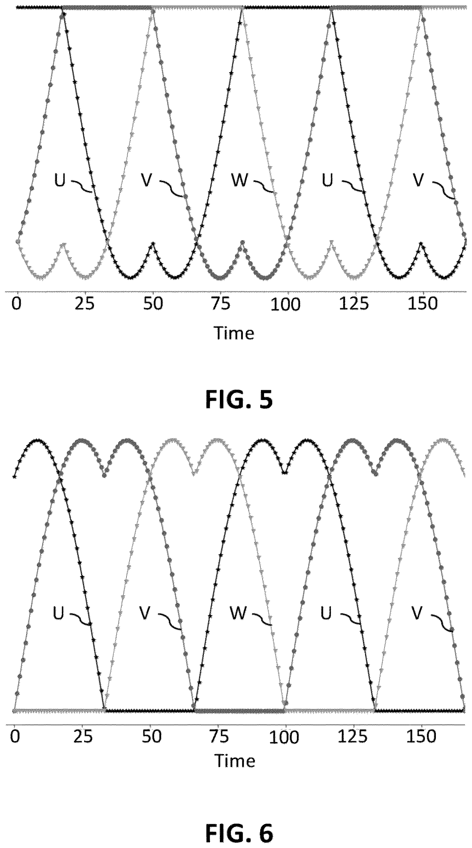

FIG. 5 and FIG. 6 respectively illustrate space vector PWM with top clamping and bottom clamping, showing the voltage for each phase as a function of time. Using these methods reduces the switching losses because only 2 phases are active at any time, generating the same amount of energy.

Using the SVM schemes shown in FIG. 5 and FIG. 6 in low-cost applications with only one shunt has some singularity: only one phase current at any period of time can be measured. Driving two phases, all the three phase currents can only be known by doing two measurements, knowing which phase is active at the actual measurement moment and with the constraint that the system is a closed system with no leakage current, so that Kirchhoff's circuit law can be applied.

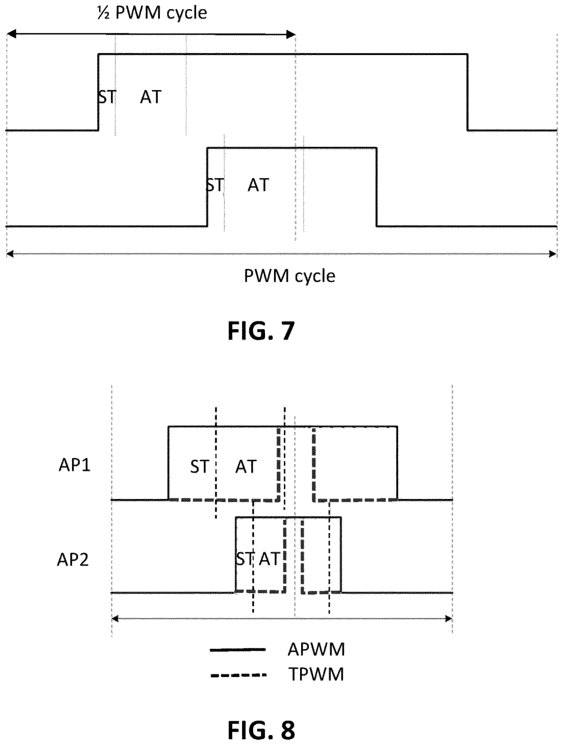

Different topologies for PWM driving can be used: left-aligned, right-aligned, center-aligned. FIG. 7 illustrates a center-aligned PWM scheme with ADC sampling time ST and ADC acquisition time AT for two current measurements on the single shunt. This ensures that the current through the shunt resistor can be accurately measured twice per period, allowing for the determination of the phase currents. Out of FIG. 7 follows, that the absolute minimum PWM cycle, needed for the current measurement consists of two values: the settling time of the signal and the ADC acquisition time.

When for example every 120 electrical degrees, one phase is going to be 0, it makes it impossible to make the second measurement which leads to a blanking time, where the motor is driven without feedback.

One possible solution is to add an additional time to the smallest PWM cycle to measure the phase current. Such methods lead to no-symmetry energetic wise, what generates acoustic noise and current ripples due to the requested mathematical target vector and wrong physically applied vector.

FIG. 8 illustrates a scenario where the target PWM is much smaller than one ADC measurement, which can lead to challenges in maintaining accurate current measurements. In this case, the space vector modulation method adapts by adding an additional modulation period when necessary, ensuring that measurements can still be taken. It can be seen that for both the Active Phase 1 (AP1) and the Active Phase 2 (AP2) the target PWM (TPWM) has an on time which is smaller than the actual PWM (APWM). In this figure ST refers to the settling time and AT to the ADC acquisition time.

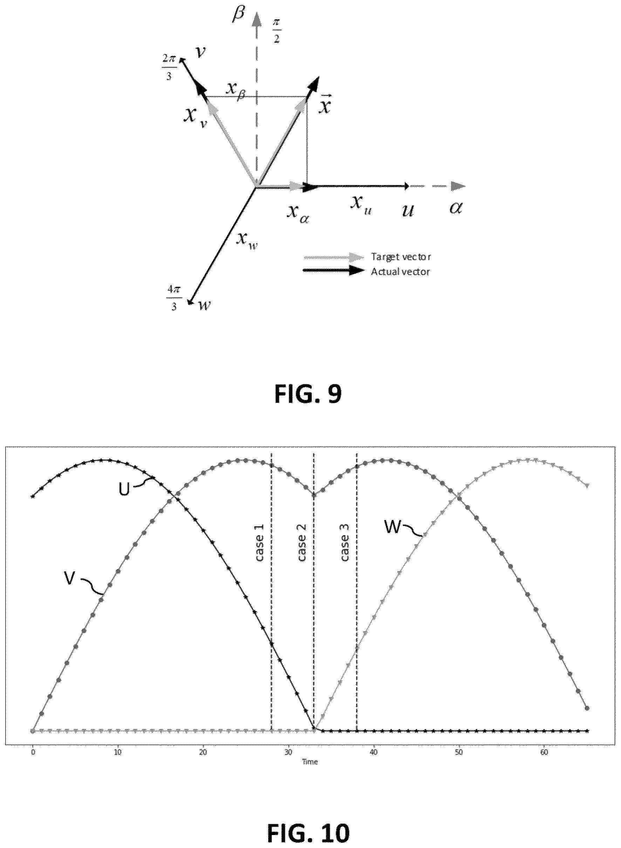

FIG. 9 shows a vector diagram with the mathematical target vector and the wrong physically applied vector when attempting to increase the PWM on-time as e.g. shown in FIG. 8. This highlights the importance of accurate modulation in maintaining the system's balance and efficiency.

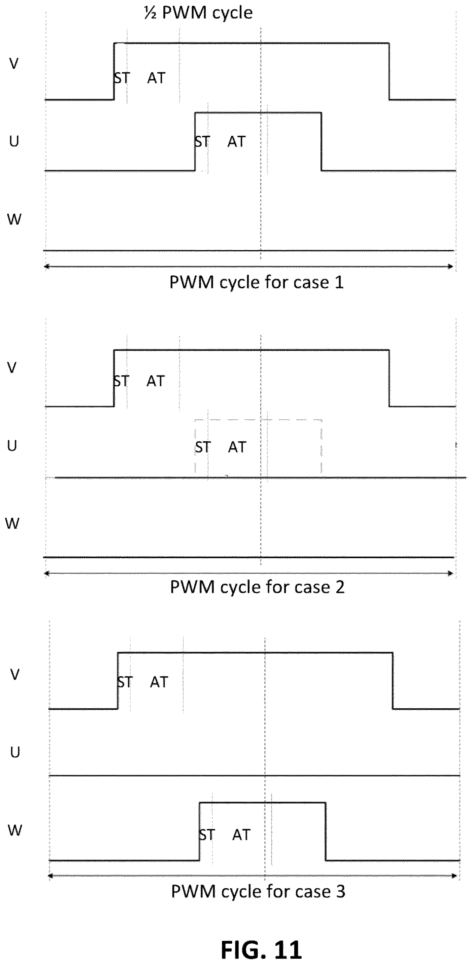

FIG. 10 illustrates space vector modulation with bottom clamp (SVM U, SVM V, and SVM W are shown) and distinguishes three cases at different moments in time, wherein no additional modulation is done for enabling two current measurements at case 2. FIG. 11 shows the PWM cycles for these cases, with the top plot showing the PWM cycle for case 1, the middle plot for case 2, and the bottom plot for case 3. It can be seen that in cases 1 and 3, a current measurement can be done for two phases, but in case 2, there is no moment when two current measurements are possible when a voltage is applied to two phases. The missing time for current measurement is indicated by the dashed line in case 2. Using SVM scheme with bottom clamp as e.g. shown in FIG. 10, every 120 degree phase changing leads to the case when two or three phases have to be grounded to generate rotation field. This case makes a current reconstruction impossible because at least two current measurements have to be done.

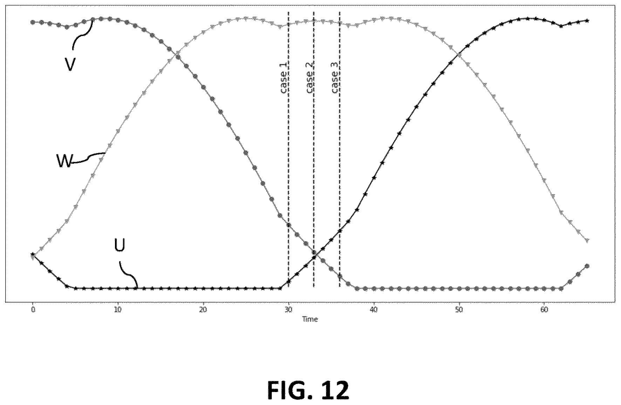

To address these limitations, FIG. 12 illustrates space vector PWM with bottom clamp in combination with an additional modulation for enabling two current measurements at case 2, in accordance with embodiments of the present invention. This additional modulation ensures that even when the rotor moves to an angle position where current measurement would otherwise be impossible, the system can still perform the necessary measurements by modifying the PWM signals.

In embodiments of the present invention the control unit is configured for adding the zero vectors to the control signals such that also at the clamping transitions two current measurements through the shunt resistor can be done. In embodiments of the present invention the control unit is configured for adding varying zero vectors in function of time and/or rotor angle. The amplitude of the zero vector may for example be varying in time and/or rotor angle. In embodiments of the present invention the amplitude of the zero vector may be linearly varying in function of time and/or rotor angle. It is an advantage of embodiments of the present invention that this makes the switching not noticeable, which leads to a reduced acoustic noise and EMC noise.

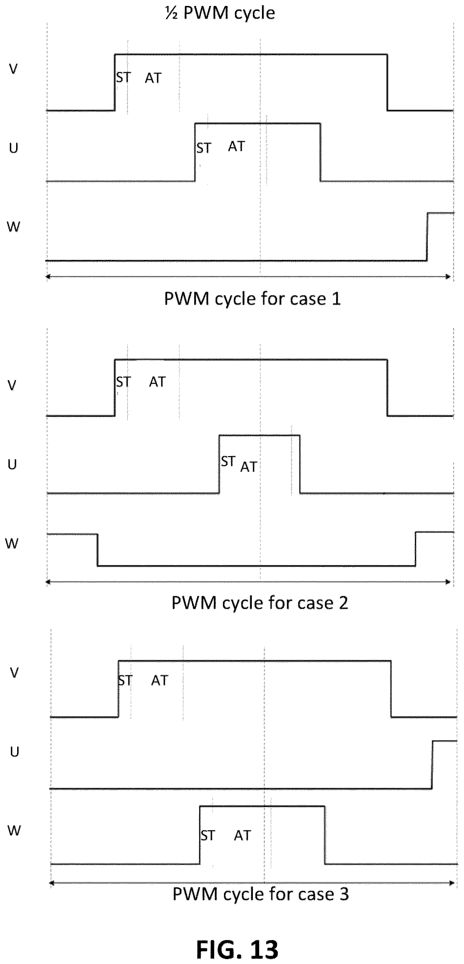

FIG. 13 further shows the requested PWM cycles for cases 1, 2, and 3 of FIG. 12, demonstrating that in case 2, two current measurements can now be performed (each current measurement is indicated by a settling time ST and an acquisition time AT), in accordance with embodiments of the present invention. An additional PWM is provided to compensate time needed for PWM sampling (see phases U, W).

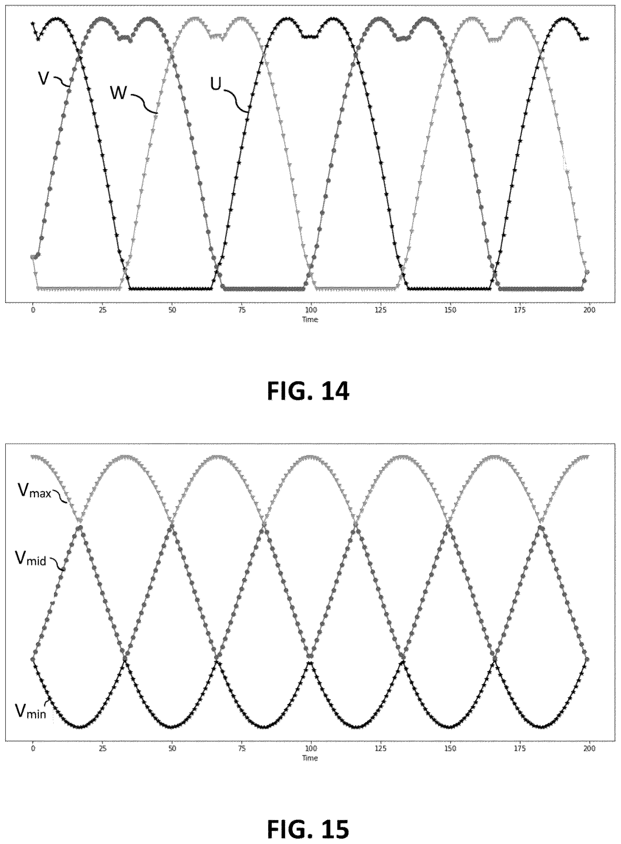

FIG. 14 illustrates space vector PWM with bottom clamp in combination with additional modulation, ensuring continuous measurement capability and maintaining system balance, in accordance with embodiments of the present invention. The additional modulation is done every 120 electrical degrees (3 times per 360°, 2 of the phases are clamping and one injection event).

The standard SVM with the bottom or top clamp uses 0V for the bottom clamp and the supply voltage VSM for the top clamp. The invention is, however, not limited thereto.

In an exemplary embodiment according to the present invention the control unit is configured for generating a PWM duty cycle which has an on-time which is sufficient for doing an ADC measurement. The control unit may for example be configured for generating PWM signals based on SVM that utilizes bottom clamping SVM-L or top clamping SVM-H. The motor driver may comprise an observer which, in case of SVM-L, checks the difference between Vmid and Vmin. Vmin typically refers to the minimum phase voltage among the three phases of the motor at any given time. In SVM, the inverter output can be described in terms of three voltage levels applied to the motor phases: the maximum phase voltage (Vmax), the middle phase voltage (Vmid), and the minimum phase voltage (Vmin). Vmid refers to the middle voltage level among the three phase voltages at a particular instant. In the context of SVM, when the three phase voltages are sorted in order of magnitude, Vmid is the voltage that lies between the maximum (Vmax) and minimum (Vmin) phase voltages. In SVM-L, the control unit may be configured for taking Vmin as zero point and for calculating all other signals relative to Vmin.

FIG. 15 shows space vector modulation with no additional modulation after inverse Clarke transformation.

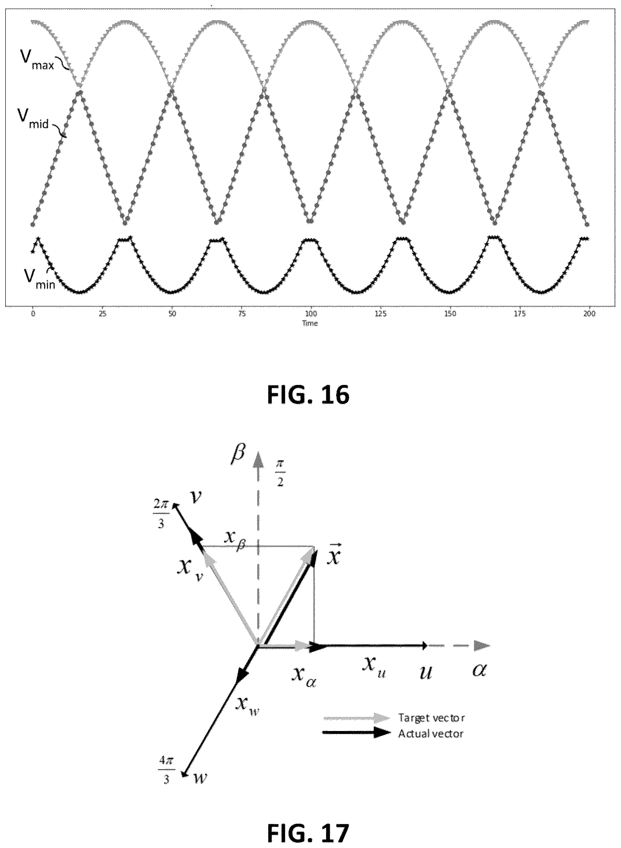

In contrast, FIG. 16 illustrates space vector modulation with repetitive additional modulation after inverse Clarke transformation, in accordance with embodiments of the present invention. The additional modulation is every 120 electrical degrees. This additional modulation ensures that the time allocated for each ADC measurement is sufficient, preventing measurement errors. In embodiments of the present invention an observer clamps the difference between Vmin and Vmid keeping the time big enough for one ADC measurement as shown in FIG. 14. The resulting Vmid signal can be used to generate the other two signals without the risk that measurement is impossible. The generated vectors are shown in FIG. 17. The advantage of this method is that the system is always balanced e.g. the resulting vector keeps its amplitude. The method compensates the duty-cycle increase for the ADC measurement each 120 electrical degrees keeping the sum energy in the coil per one PWM cycle the same as it would be applied without the compensation.

FIG. 17 shows the generated vectors for the space vector modulation illustrated in FIG. 16, confirming that the system remains balanced and that all three phase currents can be accurately reconstructed.

When operating at very low speeds, as is typical in fan or blower applications, the SVM generates three sinusoidal signals. This ensures that the system can operate smoothly even at low speeds.

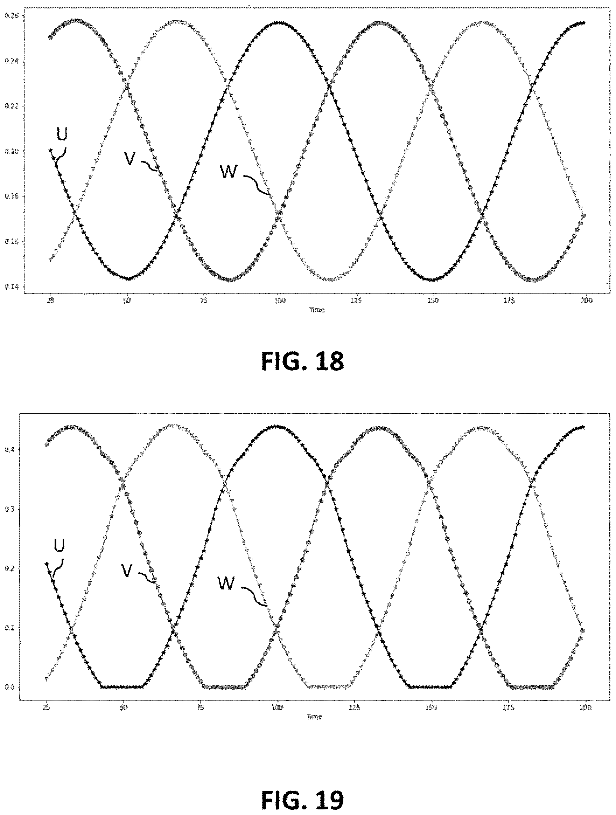

FIG. 18 illustrates three sinusoidal signals generated by SVM when the target PWM is smaller than the minimum PWM. The normalized modulated amplitude is shown in function of time.

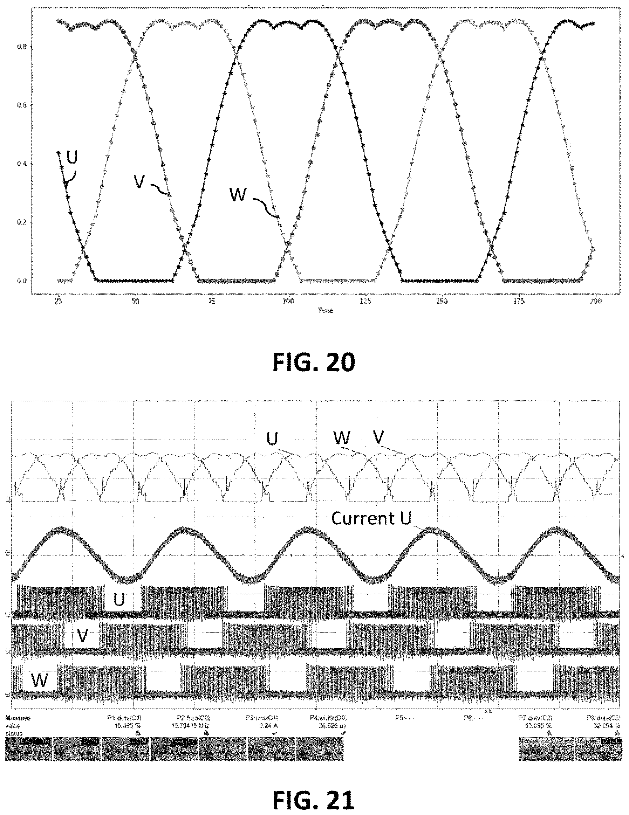

As the motor speed increases and the target PWM becomes larger, the phase voltages start clamping at the top or bottom. FIG. 19 shows three sinusoidal signals generated by SVM when the target PWM is larger than the minimal PWM, in accordance with embodiments of the present invention. Finally, FIG. 20 shows three sinusoidal signals generated by SVM when the target PWM is significantly larger than the minimal PWM, illustrating the system's ability to handle a wide range of operating conditions. FIG. 19 and FIG. 20 show the normalized modulated amplitude in function of time.

In embodiments of the present invention the proposed space vector modulation may be combined in parallel to dead-time compensation during high side and low side transistor switching of one motor phase and/or in combination with third harmonic injection to compensate the energy losses for sinusoidal voltage generation as previously described. A motor driver or method in accordance with embodiments of the present invention takes into account the minimal possible phase duty cycle (minimal PWM) for one current sampling and modulates space vector in such a way that two current measurements are always possible to reconstruct all the 3 phase currents for the closed loop control algorithm (e.g. FOC).

In embodiments of the present invention the control unit is configured such that the switching effective inverters are commutating only two phases in one period of time which is minimally required for a FOC. The smaller number of switching also leads to a reduction of acoustic noise / EMC and is smoothing the rotation due to reduced loosed and interlock delay time, also known as dead time. This dead time specifies the delay between switching the High side (HSx with x referring to the phase number) and Low Side (LSx) transistors producing no short circuit when both HSx and LSx transistors are switching the connected motor phase.

To verify the implementation of the proposed method, FIG. 21 shows oscilloscope plots of the applied PWM in a method in accordance with embodiments of the present invention, and the resulting duty cycles. The top plot shows the resulting duty cycles, while the plot below shows the current through the U phase. The three plots underneath respectively show the applied PWM for the U phase, V phase, and W phase. These plots provide visual confirmation of the effectiveness of the proposed modulation and control strategies in achieving accurate and efficient motor control. A space vector modulation (SVM) is disclosed herein, presenting a novel method of creating a rotating voltage reference vector. Proposed techniques can be applied for brushless direct current (BLDC), permanent magnet synchronous motors (PMSM), synchronous reluctance motors (SynRM) as well as alternate current induction motors (ACIM). The proposed SVM is supposed to be used in low-cost single-shunt applications with strong low acoustical noise and torque ripple requirements on low-powered MCUs to generate the PWM signals for the 3-phase inverter. Duty cycles of each channel are based on a given angular position and length of the Space Vector (SV).

To reduce the switching losses, different combinations of zero vectors can be used. A zero vector refers to a specific state of the inverter where no voltage is applied to the motor windings. For the most effective system, ground (GND) or the motor supply voltage (VSM) has been taken as a reference for the zero vector.

In embodiments of the present invention only 2 phases are switched at the same time and only when the ADC measurement is not possible, a modulation is done. In that case also the third phase is switched to increase the duration of PWM to allow ADC measurement. In this condition the summarized energy remains the same as without such a modulation, so that there is no disturbance.

In embodiments of the present invention a space vector modulation is used and a zero vector is injected to make phases big enough for 1 ADC measurement keeping the system balanced in in all cases. It is an advantage of embodiments of the present invention that it always insures observability of each phase current.

The standard SVM with the bottom or top clamp uses 0V for the bottom clamp and VSM voltage for the top clamp.

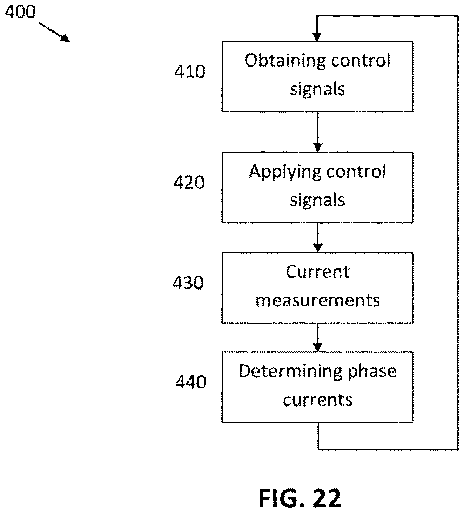

In a third aspect embodiments of the present invention relate to a method for controlling a motor comprising a plurality of phases. An exemplary flow chart of such a method is shown in FIG. 22. The method 400 comprises obtaining 410 control signals to generate pulse width modulation signals, based on space vector modulation that utilizes bottom clamping alternatingly between the different motor phases or that utilizes top clamping alternatingly between the different motor phases. The control signals are obtained using phase currents as feedback using a closed loop control algorithm. Obtaining the control signals comprises injecting zero vectors at clamping transitions from one phase to another phase such that also at the clamping transitions two current measurements through the shunt resistor can be done for determining the phase currents from these current measurements.
The method, furthermore, comprises applying 420 the control signals for driving the motor, measuring 430 the current through the shunt resistor at least twice per period of time, and determining 430 the phase currents based on the measured currents through the shunt resistor. All techniques which are applicable for a motor driver in accordance with embodiments of the present invention can also be used for a method in accordance with embodiments of the present invention.

## Claims

1. A motor driver (100) for driving a motor (200) comprising a plurality of phases (210), the motor driver (100) comprising:
- a motor driving circuit (120) for providing current through the motor phases (210), the motor driving circuit (120) comprising a plurality of switches (121) and a shunt resistor (122) in a common path of the motor driving circuit (120),
- a control unit (110) configured for
generating control signals for the switches (121) to generate pulse width modulation signals, based on space vector modulation that utilizes bottom clamping alternatingly between the different motor phases (210) or that utilizes top clamping alternatingly between the different motor phases (210),
injecting zero vectors at clamping transitions from one phase to another phase such that also at the clamping transitions two current measurements through the shunt resistor (122) can be done for determining the phase currents from these current measurements,
and for measuring the current through the shunt resistor (122) at least twice per period of time and for determining the phase currents based on the measured currents through the shunt resistor wherein the control unit is configured for using a closed loop control algorithm wherein the determined phase currents are used as feedback for generating the control signals for the switches.

2. A motor driver (100) according to claim 1, wherein the control unit (110) is configured for injecting varying zero vectors at the clamping transitions.

3. A motor driver (100) according to any of the previous claims, wherein the closed loop control algorithm is field oriented control.

4. A motor driver (100) according to any of the previous claims, wherein the pulse width modulation signals are such that sine wave shaped phase currents with a fundamental frequency are obtained.

5. A motor driver (100) according to claim 4, wherein the control unit (110) is configured to generate pulse width modulation signals, such that the obtained phase currents additionally comprise a third harmonic component which has a frequency three times the fundamental frequency.

6. A motor driver (100) according to any of the previous claims wherein the motor driving circuit is a three-phase voltage source inverter.

7. A motor system (300) comprising a motor driver (100) according to any of the previous claims and a motor (200) comprising a plurality of phases (210), wherein the motor driver (100) is configured for driving the motor (200).

8. A motor system (300) according to claim 7, wherein the motor (200) is a brushless direct current motor, or a permanent magnetic synchronous motor, or a synchronous reluctance motor, or an alternate current induction motor.

9. A method (400) for controlling a motor comprising a plurality of phases, the method comprising
- obtaining (410) control signals to generate pulse width modulation signals, based on space vector modulation that utilizes bottom clamping alternatingly between the different motor phases (210) or that utilizes top clamping alternatingly between the different motor phases (210), wherein the control signals are obtained using phase currents as feedback using a closed loop control algorithm, wherein obtaining (410) the control signals comprises injecting zero vectors at clamping transitions from one phase to another phase such that also at the clamping transitions two current measurements through the shunt resistor (122) can be done for determining the phase currents from these current measurements
- applying (420) the control signals for driving the motor,
- measuring (430) the current through the shunt resistor (122) at least twice per period of time,
- determining (440) the phase currents based on the measured currents through the shunt resistor.

10. A method (400) according to claim 9 wherein injecting the zero vectors comprises injecting varying zero vectors at the clamping transitions.

11. A method (400) according to any of the claims 9 or 10 wherein the control algorithm is field oriented control.

12. A method (400) according to any of the claims 9 to 11, wherein the control signals are such that sine wave shaped phase currents with a fundamental frequency are obtained.

13. A method (400) according to claim 12, wherein the control signals are such that the obtained phase currents additionally comprise a third harmonic component which has a frequency three times the fundamental frequency.
